# EUROPÄISCHE PATENTSCHRIFT

(11) **EP 0 811 739 B1**
(45) Veröffentlichungstag und Bekanntmachung des Hinweises auf die Patenterteilung: **31.03.2004**
(21) Anmeldenummer: 97108985.9
(22) Anmeldetag: 04.06.1997
(51) Int. Cl.: E05B 49/00, B60R 25/04

(54) **Vorrichtung und Verfahren zur Prüfung der Nutzungsberechtigung für Zugangskontrolleinrichtungen, insbesondere Schliesseinrichtungen für Fahrzeuge**
Device and method for checking the user authorization of an access control system,in particular locking device for vehicles
Dispositif et méthode pour vérifier l'autorisation de contrôle d'accés, en particulier dispositif de fermeture des véhicules

(30) Priorität: 06.06.1996 DE 19622721
(43) Veröffentlichungstag der Anmeldung: 10.12.1997
(73) Patentinhaber: Delphi Automotive Systems Deutschland GmbH, D-42369 Wuppertal (DE)
(72) Erfinder: Konrad, Reimund, 51647 Gummersbach (DE); Petsching, Wilfried, 51688 Wipperfürth (DE); Weiss, Bernd, 51647 Gummersbach (DE)
(74) Vertreter: COHAUSZ & FLORACK

(56) Entgegenhaltungen:
- EP-A- 0 503 695
- EP-A- 0 596 343
- DE-A- 4 441 001
- US-A- 5 506 575
- MALMROS G V A: "Access Control System. May 1972." IBM TECHNICAL DISCLOSURE BULLETIN, Bd. 14, Nr. 12, Mai 1972, Seiten 3860-3861, XP002103270 New York, US

## Beschreibung

Die Erfindung betrifft eine Vorrichtung bzw. ein Verfahren zur Prüfung der Nutzungsberechtigung für Zugangskontrolleinrichtungen, insbesondere Schließeinrichtungen für Fahrzeuge.

Bei einer solchen Vorrichtung bzw. bei einem solchen Verfahren erfolgt ein Austausch von Identifikationsdaten zwischen einem zugangsseitigen dauerenergieversorgten Steuergerät, welches sich beispielsweise im Fahrzeug befindet, und einer benutzerseitigen Schlüsseleinrichtung, beispielsweise einem Fahrzeugschlüssel. Die Schlüsseleinrichtung enthält dabei einen Transponder, welcher bei elektromagnetischer Anregung durch Signale des Steuergerätes angeregt eine Signalfolge aussendet, die wiederum im Steuergerät empfangen wird.

Zur Feststellung der Zugangsberechtigung wird in dem Steuergerät überprüft, ob die von der Schlüsseleinrichtung empfangene Signalfolge aus einem authorisierten Schlüssel stammt. Hierzu wird ausgehend von einem Initialzustand, bei dem im Transponder kein Verschlüsselungscode hinterlegt wird, dort ein geheimer Code von demjenigen Steuergerät angelernt, für das die Schlüsseleinrichtung dienen soll. Der geheime Code in der Schlüsseleinrichtung entspricht dann dem geheimen Code des verwendeten Steuergerätes. Sämtliche für das Fahrzeug geltenden Schlüssel werden auf diese Weise an den geheimen Code des Steuergerätes angelernt. Der geheime Code ist als solcher nicht lesbar. Er dient dazu, die von der Schlüsseleinrichtung empfangene Information zu codieren, so daß das Steuergerät aus der rückübertragenen Information von der Schlüsseleinrichtung erkennt, daß diese einem authorisierten Schlüssel zugeordnet ist.

Solche Vorrichtungen sind beispielsweise aus der DE 4317119 C2, der DE 4435894 A1 oder der US-A-5 506 575 bekannt.

Dadurch, daß der geheime Code der Schlüsseleinrichtung selber nicht lesbar ist, können die an ein bestimmtes Steuergerät angelernten Schlüssel beim Ausfall dieses Steuergerätes üblicherweise nicht mehr weiter verwendet werden.

Der Erfindung liegt davon ausgehend die Aufgabe zugrunde, ein Verfahren bzw. eine Vorrichtung der eingangs genannten Art dahingehend weiterzuentwickeln, daß auch nach dem Ersatz des Steuergerätes durch ein weiteres Steuergerät die vorhandenen Schlüsseleinrichtungen weiter verwendet werden können.

Diese Aufgabe wird bei einer Vorrichtung zur Prüfung der Nutzungsberechtigung für Zugangskontrolleinrichtungen, die
- eine zugangsseitige Steuereinrichtung mit Speichermitteln für einen Code,
- eine benutzerseitige Schlüsseleinrichtung, die einen Transponder enthält, sowie
- Vergleichsmittel in der Steuereinrichtung zur Feststellung der für die Freigabe der Zugangseinrichtung erforderlichen Berechtigung, derart, daß die vom Transponder ausgesandte Information mit einer in der Steuereinrichtung festgelegten Vorgabeinformation verglichen wird und daß nur bei einer Übereinstimmung eine Freigabe des Zugangs erfolgt,
umfaßt, dadurch gelöst,
a) daß die Speichermittel der zugangsseitigen Steuereinrichtung einen geheimen Code (secret key) und einen Benutzercode (PIN) speichern,
b) daß in dem Transponder der benutzerseitigen Schlüsseleinrichtung der geheime Code (secret key) und der Benutzercode (PIN) durch Anlernen, insbesondere von der Steuereinrichtung, niedergelegt sind,
c) daß die vom Transponder ausgesandte Information, die von dem Vergleichsmitteln in der Steuereinrichtung zur Feststellung der für die Freigabe der Zugangseinrichtung erforderlichen Berechtigung mit der in der Steuereinrichtung festgelegten Vorgabeinformation verglichen wird, aus einer nach dem angelernten geheimen Code verschlüsselten Benutzercodeinformation besteht,
d) daß die Schlüsseleinrichtung weitere Vergleichsmittel umfaßt, die mit Verriegelungsmitteln (Lockbits) für den geheimen Code (secret key) derart gekoppelt sind, daß mindestens eine teilweise Freigabe zum Überschreiben des in der Schlüsseleinrichtung gespeicherten geheimen Codes (secret key) erfolgt, wenn die weiteren Vergleichsmittel (Vb) eine Übereinstimmung des von der Steuereinrichtung ausgesandten Benutzercode (PIN) mit dem abgespeicherten Benutzercode (PIN) feststellen.

Bei einem Verfahren zur Prüfung der Nutzungsberechtigung für Zugangskontrolleinrichtungen, bei dem zwischen einem zugangsseitigen, dauerenergieversorgten Steuergerät und einer benutzerseitigen einen Transponder enthaltenden Schlüsseleinrichtung bidirektional Identifikationsdaten ausgetauscht werden, wobei die Feststellung der für die Freigabe der Zugangseinrichtung erforderlichen Berechtigung derart erfolgt, daß eine vom Transponder ausgesandte Codeinformation mit einer in der Steuereinrichtung festgelegten Vorgabeinformation verglichen wird und daß nur bei einer Übereinstimmung eine Freigabe des Zugangs erfolgt, wird diese Aufgabe dadurch gelöst, daß
a) zunächst die Schlüsseleinrichtung an einen.im Steuergerät abgelegten geheimen Code (secret key) sowie einen Benutzercode (PIN) angelernt wird, und anschließend die vom Transponder ausgesandte Information für den Vergleich mit der in der Steuereinrichtung festgelegten Vorgabeinformation zur Feststellung der für die Freigabe der Zugangseinrichtung erforderlichen Berechtigung nach dem angelernten geheimen Code verschlüsselt wird, und
b) beim Ersetzen des Steuergerätes durch ein weiteres Steuergerät zunächst der Benutzercode (PIN) des ersten Steuergerätes zur Schlüsseleinrichtung übertragen wird, wodurch in der Schlüsseleinrichtung nach Prüfung der Übereinstimmung des empfangenen Benutzercodes (PIN) mit dem angelernten Benutzercode (PIN) der geheime Code mindestens teilweise zum Überschreiben freigegeben wird, und daß anschließend durch Übertragen des für das weitere Steuergerät geltenden geheimen Codes (secret key') die Schlüsseleinrichtung an den für das weitere Steuergerät geltenden geheimen Code angelernt wird.

Die Erfindung zeichnet sich dadurch aus, daß beim Ausfall eines Steuergerätes dessen alte PIN-Nummer in das neue (weitere) Steuergerät eingegeben wird und hierdurch der Bereich des geheimen Codes in der Schlüsseleinrichtung bei Übereinstimmung mit dem in der Schlüsseleinrichtung hinterlegten, von dem ursprünglichen Steuergerät angelernten Benutzercode (PIN) freigegeben wird. Nach dessen Freigabe kann er mit dem neuen geheimen Code und dem neuen Benutzercode des neuen Steuergerätes überschrieben werden, so daß dieselbe Schlüsseleinrichtung im Anschluß daran für das neue Steuergerät authorisiert ist. Somit kann unter Beibehaltung des für die Sicherheit wesentlichen Vorteils, daß der geheime Code in der Schlüsseleinrichtung nicht lesbar ist, gleichwohl der Vorteil der Anpaßbarkeit derselben Schlüsseleinrichtung an ein Ersatz-/ Steuergerät erreicht werden.

Bevorzugte Ausführungsformen gehen aus den Unteransprüchen hervor.

Dabei ist es von besonderer Bedeutung, daß die erfindungsgemäße Vorrichtung gegen Manipulation dadurch geschützt ist, daß nur eine begrenzte Anzahl von Übertragungsvorgängen des Benutzercodes PIN zulässig ist. Falls nämlich - wie dies bei vergleichbaren Code-Sicherungen, wie beispielsweise beim Mobiltelefon oder bei Geldautomaten bekannt ist - mehrfach ein falscher Benutzercode eingegeben wurde, wird die Verriegelung des geheimen Codes in der Schlüsseleinrichtung blockiert, so daß keinesfalls ein Überschreiben des geheimen Codes mehr möglich ist.

Die Erfindung wird im folgenden anhand eines Ausführungsbeispiels näher erläutert. Hierzu wird auf die Erläuterungsskizze Bezug genommen.

Mit dem Bezugszeichen A ist ein zugangsseitiges, insbesondere dauerenergieversorgtes Steuergerät bezeichnet und mit B eine benutzerseitige Schlüsseleinrichtung.

Zunächst befinden sich in dem Steuergerät A ein geheimer Code (secret key) sowie ein Benutzercode (PIN), der werkseitig einprogrammiert wurde. Nur der Benutzercode ist dem Fahrzeugbesitzer bekannt. Die Schlüsseleinrichtung B befindet sich demgegenüber im Initialzustand, in dem keine Codierung innerhalb des in der Schlüsseleinrichtung angeordneten Transponders vorliegt. Im Schritt 2 wird die Schlüsseleinrichtung B sowohl an den geheimen Code (secret key) als auch an den Benutzercode PIN des Steuergerätes A angelernt, indem die entsprechenden Codes in den secret-key-Bereich des Transponders in der Schlüsseleinrichtung B übertragen werden. Hierzu weist der secret-key-Bereich des Transponders eine Länge von 95 Bit auf, wobei Bit 0 bis Bit 15 schlüsselspezifisch und Bit 16 bis Bit 95 fahrzeugspezifisch vorgebbar sind. Im Bereich von Bit 80 bis Bit 95 wird der Benutzercode PIN des Steuergerätes des Fahrzeuges hinterlegt.

Nach diesem Vorgang ist der geheime Code innerhalb der Schlüsseleinrichtung derart abgespeichert, daß er in keinem Fall lesbar ist. Er ist über Lockbits dahingehend verriegelt, daß er nur dann, wenn eine entsprechend dem Benutzercode PIN eingegebene Zahlenfolge identifiziert wird, zum Überschreiben mit einem anderen geheimen Code freigegeben wird.

Dieser Vorgang nach Stufe 2 wird für alle Schlüsseleinrichtungen wiederholt, die mit dem Steuergerät A in Verbindung stehen sollen.

In Stufe 3 ist nun angenommen, daß das bisherige Steuergerät A ausgefallen ist und durch ein neues Steuergerät A' ersetzt werden soll, welches werkseitig einen anderen geheimen Code secret key' sowie einen abweichenden Benutzercode PIN' aufweist. Hierdurch ist zunächst eine Benutzung der auf das ursprüngliche Steuergerät A angelernten Schlüsseleinrichtung B ausgeschlossen, da keine Übereinstimmung in den secret key's vorliegt.

Daher erfolgt gemäß Schritt 4 die Eingabe des ursprünglichen PIN-Codes (des alten Steuergerätes A) in das neue Steuergerät A'. Die Eingabe erfolgt beispielsweise mittels eines Diagnose-Testers. Durch die Übertragung der alten PIN-Nummer zum Transponder wird der Schlüsseleinrichtung mitgeteilt, daß dieser in den "Replace Mode" gehen soll, dies bedeutet, daß der Bereich des geheimen Codes innerhalb des Transponders durch entsprechend gesetzte Lockbits beschreibbar wird. Hierdurch wird der Bereich des secret key in der Schlüsseleinrichtung zum Überschreiben mit dem neuen secret key' des neuen Steuergerätes A' sowie der neuen PIN-Nummer PIN' freigegeben. Hierdurch wird die Schlüsseleinrichtung B anwendbar für das neue Steuergerät A'.

Die beschriebenen Vorgänge werden nacheinander auf sämtliche vorhandenen Schlüsseleinrichtungen angewendet, so daß schließlich alle ursprünglichen Schlüsseleinrichtungen auch für das neue Steuergerät A' verwendbar sind.

Somit kann der Fahrzeugbesitzer auch im Falle eines notwendigen Austausches des Steuergerätes die ihm beim Fahrzeugkauf übergebenen Schlüssel weiter benutzen.

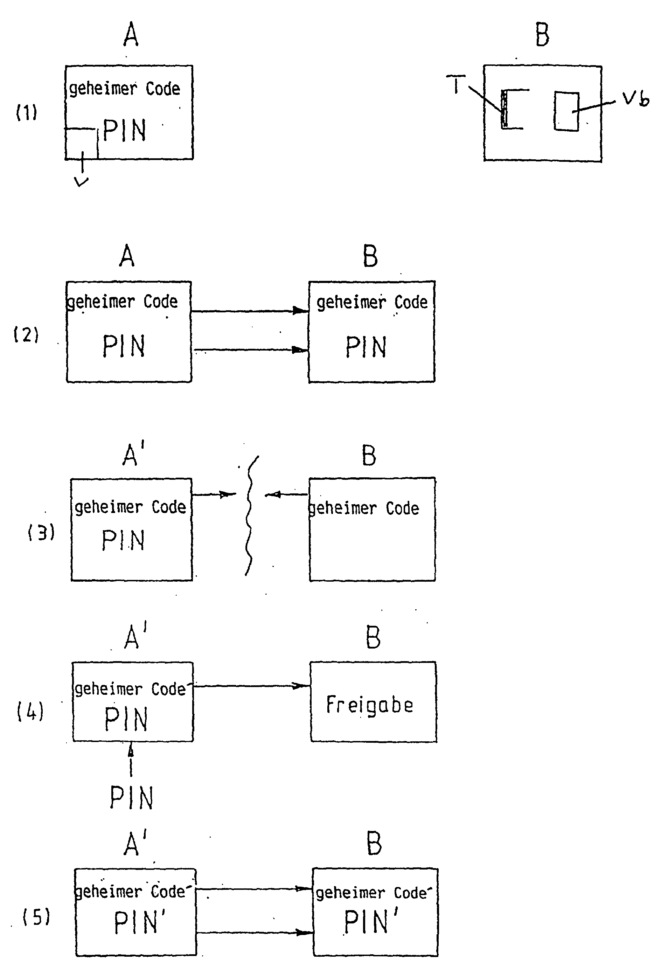

Der beschriebene Vorgang weist noch einen in der Zeichnung nicht dargestellten Sicherheitsaspekt auf, der darin besteht, daß ein Zähler für die Anzahl der Übertragungsvorgänge des PIN-Codes in der Schlüsseleinrichtung vorhanden ist. Jedes Mal, wenn der Replace Mode ausgeführt wird, d.h. ein PIN-Code zum Transponder gesendet wird, wird dieser von außen nicht beschreibbare Zähler um eins erhöht. Der Zähler weist darüber hinaus die Vorgabemöglichkeit eines Grenzwertes auf, beispielsweise der Zahl Zehn. Dies hat zur Folge, daß die Verriegelung des geheimen Codes blockiert wird, falls zehn Eingaben von PIN-Codes erfolgt sind und zuvor noch keine Freigabe der Lockbits zum Überschreiben des geheimen Codes erfolgt ist. Hierdurch wird verhindert, daß beispielsweise sämtliche möglichen PIN-Codes der Reihe nach eingegeben (eingescannt) werden und hierdurch der Schlüssel in den ursprünglichen Zustand versetzt werden und somit unbrauchbar würde.

## Patentansprüche

1. Vorrichtung zur Prüfung der Nutzungsberechtigung für Zugangskontrolleinrichtungen, insbesondere Schließeinrichtungen für Fahrzeuge, mit
- einer zugangsseitigen Steuereinrichtung (A) mit Speichermitteln für einen Code,
- einer benutzerseitigen Schlüsseleinrichtung (B), die einen Transponder (T) enthält, sowie
- Vergleichsmitteln (V) in der Steuereinrichtung (A) zur Feststellung der für die Freigabe der Zugangseinrichtung erforderlichen Berechtigung, derart, daß die vom Transponder (T) ausgesandte Information mit einer in der Steuereinrichtung (A) festgelegten Vorgabeinformation verglichen wird und daß nur bei einer Übereinstimmung eine Freigabe des Zugangs erfolgt,
wobei
a) die Speichermittel der zugangsseitigen Steuereinrichtung (A) einen geheimen Code (secret key) und einen Benutzercode (PIN) speichern,
b) in dem Transponder (T) der benutzerseitigen Schlüsseleinrichtung (B) der geheime Code (secret key) und der Benutzercode (PIN) durch Anlernen, insbesondere von der Steuereinrichtung (A), niedergelegt sind,
c) die vom Transponder (T) ausgesandte Information, die von dem Vergleichsmitteln (V) in der Steuereinrichtung (A) zur Feststellung der für die Freigabe der Zugangseinrichtung erforderlichen Berechtigung mit der in der Steuereinrichtung (A) festgelegten Vorgabeinformation verglichen wird, aus einer nach dem angelernten geheimen Code verschlüsselten Benutzercodeinformation besteht,
d) **dadurch gekennzeichnet, daß** die Schlüsseleinrichtung (B) weitere Vergleichsmittel (Vb) umfaßt, die mit Verriegelungsmitteln (Lockbits) für den geheimen Code (secret key) derart gekoppelt sind, daß mindestens eine teilweise Freigabe zum Überschreiben des in der Schlüsseleinrichtung gespeicherten geheimen Codes (secret key) erfolgt, wenn die weiteren Vergleichsmittel (Vb) eine Übereinstimmung des von der Steuereinrichtung ausgesandten Benutzercode (PIN) mit dem abgespeicherten Benutzercode (PIN) feststellen.

2. Vorrichtung nach Anspruch 1
**dadurch gekennzeichnet, daß** die Schlüsseleinrichtung einen zusätzlichen Zähler aufweist für die Anzahl der Übertragungsvorgänge des Benutzercodes (PIN) vom Steuergerät auf die Schlüsseleinrichtung.

3. Vorrichtung nach Anspruch 2,
**dadurch gekennzeichnet, daß** dem zusätzlichen Zähler ein Grenzwert vorgebbar ist, bei dessen Erreichen die Freigabe der Verriegelungsmittel blockiert wird.

4. Vorrichtung nach einem der vorhergehenden Ansprüche,
**dadurch gekennzeichnet, daß** der geheime Code aus mehreren Abschnitten besteht.

5. Vorrichtung nach Anspruch 4
**dadurch gekennzeichnet, daß** einer der Abschnitte schlüsselspezifisch und ein anderer fahrzeugspezifisch vorgebbar ist.

6. Vorrichtung nach Anspruch 5
**dadurch gekennzeichnet, daß** der fahrzeugspezifisch vorgebbare Abschnitt den Benutzercode (PIN) enthält.

7. Vorrichtung nach einem der vorhergehenden Ansprüche
**dadurch gekennzeichnet, daß** die Kopplung zwischen Steuereinrichtung(A) und Schlüsseleinrichtung (B) galvanisch, insbesondere in Form einer Chipkarte, erfolgt.

8. Vorrichtung nach einem der vorhergehenden Ansprüche
**dadurch gekennzeichnet, daß** die Kopplung zwischen Steuereinrichtung (A) und Schlüsseleinrichtung (B) kapazitiv und/oder induktiv erfolgt.

9. Verfahren zur Prüfung der Nutzungsberechtigung für Zugangskontrolleinrichtungen, insbesondere Schließeinrichtungen für Fahrzeuge, bei dem zwischen einem zugangsseitigen, dauerenergieversorgten Steuergerät (A) und einer benutzerseitigen einen Transponder enthaltenden Schlüsseleinrichtung (B) bidirektional Identifikationsdaten ausgetauscht werden, wobei die Feststellung der für die Freigabe der Zugangseinrichtung erforderlichen Berechtigung derart erfolgt, daß eine vom Transponder (T) ausgesandte Codeinformation mit einer in der Steuereinrichtung (A) festgelegten Vorgabeinformation verglichen wird und daß nur bei einer Übereinstimmung eine Freigabe des Zugangs erfolgt,
a) wobei zunächst die Schlüsseleinrichtung (B) an einen im Steuergerät (A) abgelegten geheimen Code (secret key) sowie einen Benutzercode (PIN) angelernt wird, und anschließend die vom Transponder (T) ausgesandte Information für den Vergleich mit der in der Steuereinrichtung (A) festgelegten Vorgabeinformation zur Feststellung der für die Freigabe der Zugangseinrichtung erforderlichen Berechtigung nach dem angelernten geheimen Code verschlüsselt wird,
b) **dadurch gekennzeichnet, daß** beim Ersetzen des Steuergerätes (A) durch ein weiteres Steuergerät (A') zunächst der Benutzercode (PIN) des ersten Steuergerätes (A) zur Schlüsseleinrichtung (B) übertragen wird, wodurch in der Schlüsseleinrichtung (B) nach Prüfung der Übereinstimmung des empfangenen Benutzercodes (PIN). mit dem angelernten Benutzercode (PIN) der geheime Code mindestens teilweise zum Überschreiben freigegeben wird, und daß anschließend durch Übertragen des für das weitere Steuergerät (A') geltenden geheimen Codes (secret key') die Schlüsseleinrichtung (B) an den für das weitere Steuergerät (A') geltenden geheimen Code angelernt wird.

10. Verfahren nach Anspruch 9,
**dadurch gekennzeichnet, daß** die mindestens teilweise Freigabe des geheimen Codes in der Schlüsseleinrichtung nur dann erfolgt, wenn nicht eine vorgegebene Anzahl von Übertragungsvorgängen des Benutzercodes (PIN) überschritten worden ist.

## Claims

1. Arrangement for testing user authorisation for access control devices, in particular locking devices for vehicles, with
- an access-side control device (A) with memory means for a code,
- a user-side key device (B) containing a transponder (T) and
- comparison means (V) in the control device (A) for establishing the authorisation required for release of the access device in such a way that the information transmitted by the transponder (T) is compared with an item of default information set in the control device (A) and release of access takes place only if there is agreement, wherein
a) the memory means of the access-side control device (A) store a secret code (secret key) and a user code (PIN),
b) in the transponder (T) of the user-side key device (B) the secret code (secret key) and the user code (PIN) are laid down by instruction, in particular by the control device (A),
c) the information transmitted by the transponder (T), which is compared by the comparison means (V) in the control device (A) with the default information set in the control device (A) to establish the authorisation required for release of the access device, consists of an item of user code information encrypted according to the instructed secret code,
d) **characterised in that** the key device (B) comprises further comparison means (Vb) which are coupled to locking means (lockbits) for the secret code (secret key) in such a way that at least a partial release for overwriting the secret code (secret key) stored in the key device takes place if the further comparison means (Vb) establish agreement of the user code (PIN) transmitted by the control device with the stored user code (PIN).

2. Arrangement according to claim 1, **characterised in that** the key device has an additional counter for the number of transfer operations of the user code (PIN) by the control device to the key device.

3. Arrangement according to claim 2, **characterised in that** a limit value can be defaulted to the additional counter, on reaching which release of the locking means is blocked.

4. Arrangement according to one of the preceding claims, **characterised in that** the secret code consists of several sections.

5. Device according to claim 4, **characterised in that** one of the sections can be defaulted as key-specific and another as vehicle-specific.

6. Device according to claim 5, **characterised in that** the section which can be defaulted as vehicle-specific contains the user code (PIN).

7. Device according to one of the preceding claims, **characterised in that** there is DC coupling between the control device (A) and the key device (B), in particular in the form of a smart card.

8. Device according to one of the preceding claims, **characterised in that** the coupling between the control device (A) and the key device (B) is capacitive and/or inductive.

9. Method for testing user authorisation for access control devices, in particular key devices for vehicles, in which identification data are exchanged bi-directionally between an access-side control device (A) supplied with permanent energy and a user-side key device (B) containing a transponder, wherein establishing the authorisation required for release of the access device takes place in such a way that an item of code information transmitted by the transponder (T) is compared with an item of default information set in the control device (A) and release of access takes place only if there is agreement, wherein
a) first the key device (B) is instructed in a secret code (secret key) filed in the control device (A) and a user code (PIN) and then the information transmitted by the transponder (T) is encrypted according to the instructed secret code for comparison with the default information set in the control device (A) to establish the authorisation required for release of the access device, **characterised in that**
b) if the control device (A) is replaced by a further control device (A') first the user code (PIN) of the first control device (A) is transferred to the key device (B), whereby in the key device (B), after testing +agreement of the received user code (PIN) with the instructed user code (PIN), the secret code is at least partially released for overwriting and then by transferring the secret code (secret key') applying to the further control device (A') the key device (B) is instructed in the secret code applying to the further control device (A').

10. Method according to claim 9, **characterised in that** the at least partial release of the secret code in the key device takes place only if a default number of transfer operations of the user code (PIN) has not been exceeded.

## Revendications

1. Dispositif pour vérifier l'autorisation d'utilisation de dispositifs de contrôle d'accès, notamment de dispositifs de fermeture pour véhicules, comportant
- un dispositif de commande (A) côté accès, comportant des moyens de mémoire pour un code,
- un dispositif à clé (B) côté utilisateur, qui contient un transpondeur (T), et
- des moyens comparateurs (V) situés dans le dispositif de commande (A) pour déterminer l'autorisation, nécessaire pour la libération du dispositif d'accès, de telle sorte que l'information émise par le transpondeur (T) est comparée à une information de prédétermination, fixée dans le dispositif de commande (A), et qu'une libération de l'accès s'effectue uniquement dans le cas d'une concordance,
dans lequel
a) les moyens de mémoire du dispositif de commande (A) côté accès mémorisent un code secret (secret key) et un code d'utilisateur (PIN),
b) dans le transpondeur (T) du dispositif à clé (B) côté utilisateur le code secret (secret key) et le code d'utilisateur (PIN) sont mémorisés par apprentissage, notamment par le dispositif de commande (A),
c) l'information, émise par le transpondeur (T) et qui est comparée par les moyens comparateurs (V) situés dans le dispositif de commande (A), pour déterminer l'autorisation nécessaire pour la libération du dispositif d'accès, à l'information de prédétermination fixée dans le dispositif de commande (A), est constituée par une information de code d'utilisateur codée conformément au code secret appris,
**caractérisé** en ce
d) que le dispositif à clé (B) comprend d'autres moyens de comparaison (Vb), qui sont couplés à des moyens de verrouillage (lockbits, c'est-à-dire bits de blocage) pour le code secret (secret key), de telle sorte qu'une libération partielle est exécutée pour l'enregistrement en surinscription du code secret (secret key) mémorisé dans le dispositif à clé, lorsque les autres moyens de comparaison (Vb) déterminent une concordance entre le code d'utilisateur (PIN), émis par le dispositif de commande, et le code d'utilisateur mémorisé (PIN).

2. Dispositif selon la revendication 1, **caractérisé en ce que** le dispositif à clé comporte un compteur supplémentaire pour le nombre des processus de transmission du code d'utilisateur (PIN) de l'appareil de commande au dispositif à clé.

3. Dispositif selon la revendication 2, **caractérisé en ce qu'**une valeur limite qui, lorsqu'elle est atteinte déclenche le blocage de la libération des moyens de verrouillage, peut être prédéterminée pour le compteur supplémentaire.

4. Dispositif selon l'une des revendications précédentes, **caractérisé en ce que** le code secret est constitué de plusieurs parties.

5. Dispositif selon la revendication 4, **caractérisé en ce qu'**une des parties peut être prédéterminée d'une manière spécifique à la clé et qu'une autre des parties peut être prédéterminée d'une manière spécifique au véhicule,

6. Dispositif selon la revendication 5, **caractérisé en ce que** la partie, qui peut être prédéterminée d'une manière spécifique au véhicule, contient le code d'utilisateur (PIN).

7. Dispositif selon l'une des revendications précédentes, **caractérisé en ce que** le couplage entre le dispositif de commande (A) et le dispositif à clé (B) s'effectue galvaniquement, notamment sous la forme d'une carte à puce.

8. Dispositif selon l'une des revendications précédentes, **caractérisé en ce que** le couplage entre le dispositif de commande (A) et le dispositif à clé (B) s'effectue d'une manière capacitive et/ou inductive.

9. Procédé pour contrôler l'autorisation d'utilisation de dispositifs de contrôle d'accès, notamment de dispositifs de fermeture pour véhicules, selon lequel des données d'identification sont échangées de façon bidirectionnelle entre un appareil de commande (A) côté accès, alimenté de façon permanente en énergie, et un dispositif à clé (B) côté utilisateur, contenant un transpondeur, selon lequel la détermination de l'autorisation nécessaire pour la libération du dispositif d'accès s'effectue de telle sorte qu'une information de code émise par le transpondeur (T) est comparée à une information de prédétermination fixée dans le dispositif de commande (A) et qu'une libération de l'accès se produit uniquement lors d'une concordance,
dans lequel
a) tout d'abord le dispositif à clé (B) apprend un code secret (secret key) mémorisé dans l'appareil de commande (A), ainsi qu'un code d'utilisateur (PIN), et ensuite l'information émise par le transpondeur (T) pour la comparaison à l'information de prédétermination, fixée dans le dispositif de commande (A), pour la détermination de l'autorisation nécessaire pour la libération du dispositif d'accès, et est codé selon le code secret appris,
**caractérisé en ce que**
b) lors du remplacement de l'appareil de commande (A) par un autre appareil de commande (A'), le code d'utilisateur (PIN) du premier appareil de commande (A) est tout d'abord transmis au dispositif à clé (B), ce qui a pour effet que dans le dispositif à clé (B), après contrôle de la concordance du code d'utilisateur reçu (PIN) et du code d'utilisateur appris (PIN), le code secret est libéré au moins en partie pour l'enregistrement en surinscription, et qu'ensuite au moyen de la transmission du code secret (secret key') valable pour l'autre appareil de commande (A'), le dispositif à clé (B) apprend le code secret valable pour l'autre appareil de commande (A').

10. Procédé selon la revendication 9, **caractérisé en ce que** la libération au moins partielle du code secret dans le dispositif à clé s'effectue uniquement lorsqu'un nombre prédéterminé de processus de transmission du code d'utilisateur (PIN) n'a pas été dépassé.
